# EUROPEAN PATENT APPLICATION

(11) **EP 4 365 493 A1**
(43) Date of publication of application: **08.05.2024**
(21) Application number: 22214246.5
(22) Date of filing: 16.12.2022
(51) Int. Cl.: F24C 7/08, A47J 36/32

(54) **COOKING PROCESS CONTROL**

(30) Priority: 04.11.2022 WO PCT/CN2022/129842
(71) Applicant: Versuni Holding B.V., 5656 AE Eindhoven (NL)
(72) Inventor: TAN, Jingwei, 5656 AE Eindhoven (NL)
(74) Representative: Vollering, Stefanus Franciscus Maria

(57) **Abstract**

In an embodiment, a computer-implemented method (100) of controlling a cooking process implemented by a cooking apparatus is described. The method comprises receiving (102): first image data corresponding to a view of food at a first time of the cooking process; and second image data corresponding to the view of the food at a second time of the cooking process. The method further comprises determining (104): a first image parameter value from a part of the first image data that corresponds to a region of interest; a second image parameter value from the part of the second image data that corresponds to the region of interest; and an indication of a change to the cooked state based on a comparison of the first and second image parameter values. In response to the indication being outside a range specified for the cooking process between the first and second times, the method further comprises providing (106) a cooking parameter for the cooking apparatus to use to cook the food in such a way to compensate for the indication being outside the range.

## Description

### TECHNICAL FIELD OF THE INVENTION

The invention relates to a computer-implemented method, a non-transitory machine-readable medium and a cooking apparatus for controlling a cooking process.

### BACKGROUND OF THE INVENTION

Starchy foods such as bread, cake and cookies may expand during a cooking process. Other foods such as vegetables and meat may shrink during the cooking process. There are multiple factors that may affect an outcome of a cooking process. For example, a cooking temperature specified by a recipe or consumer may not result in food being cooked to an expected quality (e.g., an expected quality in terms of size, shape, color, texture, taste, juiciness, etc., of the food). Further, a cooking apparatus may not achieve an accurate cooking temperature and various other factors may not be accounted for such as the environmental temperature, the dimensions of a chamber of a cooking apparatus, the position that the food is placed within the chamber, etc. In an example, if the temperature is too hot, food such as cake may rise too quickly, resulting in the cake erupting at its surface and/or becoming too dark, in contrast to consumer expectations.

### SUMMARY OF THE INVENTION

A camera may be integrated as part of a cooking apparatus such as an air fryer or oven, etc. Computer vision technology such as based on certain machine learning techniques may be used to monitor the cooking process based on images acquired by such a camera. However, some cooking apparatus may have limited compute resource, meaning that certain computer vision technologies may be unsuitable for such cooking apparatus to implement.

Certain aspects or embodiments described herein relate to controlling a cooking process based on image data such as may be acquired by a camera of a cooking apparatus. Certain aspects or embodiments may reduce or obviate certain problems associated with using computer vision technologies to monitor or control a cooking process.

In a first aspect, a computer-implemented method of controlling a cooking process implemented by a cooking apparatus is described. The method comprises receiving: first image data corresponding to a view of food at a first time of the cooking process; and second image data corresponding to the view of the food at a second time of the cooking process. The method further comprises determining a first image parameter value from a part of the first image data that corresponds to a region of interest. The region of interest is selected to comprise a part of the view in which movement of a portion of the food during the cooking process is apparent from a comparison of respective parts of the first image data and the second image data that correspond to the region of interest. The first image parameter value is representative of a cooked state of the food at the first time of the cooking process. The method further comprises determining a second image parameter value from the part of the second image data that corresponds to the region of interest. The second image parameter value is representative of the cooked state of the food at the second time of the cooking process. The method further comprises determining an indication of a change to the cooked state based on a comparison of the first and second image parameter values. In response to the indication being outside a range specified for the cooking process between the first and second times, the method further comprises providing a cooking parameter for the cooking apparatus to use to cook the food in such a way to compensate for the indication being outside the range.

Some embodiments relating to the first and other aspects are described below.

In some embodiments, if the indication is within the range, the indication represents a prediction that the food is expected to meet a specified quality as a result of the cooking process.

In some embodiments, if the indication is outside the range, the indication represents a prediction that the food is unexpected to meet the specified quality as a result of the cooking process. In this case, the cooking parameter is to compensate for the indication being outside the range in order for the food to meet the specified quality as a result of the cooking process.

In some embodiments, the food expands or contracts at a higher rate during a first phase of the cooking process than during a second phase of the cooking process. The food may darken at a higher rate during the second phase than in the first phase. The range specified for use during the first phase may be different to the range specified for use during the second phase.

In some embodiments, the region of interest comprises: a first area that maps to a part of the food visible in the view; and a second area that maps to a part of a background to the food visible in the view.

In some embodiments, the first image parameter value is determined based on a ratio of the first area to the second area in the region of interest of the first image data. The second image parameter value may be determined based on the ratio of the first area to the second area in the region of interest of the second image data.

In some embodiments, the first image parameter value is determined based on a color parameter value derived from a part of the first image data that corresponds to the first area. The second image parameter value may be determined based on the color parameter value derived from a part of the second image data that corresponds to the first area.

In some embodiments, the portion of the food comprises an edge of the food visible in the view with respect to a background to the food visible in the view.

In some embodiments, the first image parameter value is an average pixel intensity value registered by a set of pixels corresponding to the region of interest in the first image data. The second image parameter value may be an average pixel intensity value registered by the set of pixels corresponding to the region of interest in the second image data.

In some embodiments, the indication is proportional to a difference between the first and second image parameter values.

In some embodiments, the indication is proportional to a difference in cooking speed between the first and second times. The cooking speed at the first time may be proportional to a difference between the first image parameter value and a reference image parameter value determined from reference image data obtained at a reference time of the cooking process. The reference image parameter value may be determined from a part of the reference image data that corresponds to the region of interest. The reference image parameter value may be representative of a cooked state of the food at the reference time of the cooking process. The cooking speed at the second time may be proportional to a difference between the second image parameter value and the reference image parameter value.

In some embodiments, the cooking speed at the first time is inversely proportional to a duration of a time between the first time and the reference time. The cooking speed at the second time may be inversely proportional to a duration of a time between the second time and the reference time.

In some embodiments, the region of interest is selected to include corresponding pixels of the first image data and second image data that are within a boundary that encloses at least part of the food visible in the view.

In some embodiments, a pixel in the first and second image data along or enclosed by a perimeter of the region of interest corresponds to a specified pixel along or enclosed by the boundary.

In a second aspect, a non-transitory machine-readable medium is described. The non-transitory machine-readable medium stores instructions readable and executable by a processor to implement the method of any one of the first aspect or related embodiments.

In a third aspect, a cooking apparatus for implementing a cooking process is described. The cooking apparatus comprises a cooking chamber for receiving food. The cooking apparatus further comprises a housing defining the cooking chamber. The cooking apparatus further comprises an air circulation system for circulating air flow inside the cooking chamber. The cooking apparatus further comprises a camera for capturing images during the cooking process. The cooking apparatus comprises a controller. The controller is configured to implement the method of any one of the first aspect or related embodiments.

Certain aspects or embodiments described herein may provide various technical benefits such as: facilitating control of a cooking process using a computationally lightweight technique suitable for implementation by resource constrained hardware such as integrated in certain cooking apparatus; improving a result of cooking process e.g., to achieve a certain quality of food; and/or improving a reliability of controlling a cooking process by simplifying a technique for monitoring the cooked state of the food, among various technical benefits as discussed herein.

These and other aspects of the invention will be apparent from and elucidated with reference to the embodiment(s) described hereinafter.

### BRIEF DESCRIPTION OF DRAWINGS

Exemplary embodiments of the invention will now be described, by way of example only, with reference to the following drawings, in which:
FIG. 1 refers to a method of controlling a cooking process according to an embodiment;
FIG. 2 is a schematic drawing of a cooking ecosystem according to an embodiment;
FIG. 3 is a schematic drawing of a cooking apparatus for implementing a cooking process according to an embodiment;
FIGS. 4(A)-(B) are schematic drawings of a view of food at different times of a cooking process;
FIGS. 5(A)-(B) are graphs of experimental data obtained when cooking a cake under different scenarios;
FIG. 6 is a schematic drawing of a machine-readable medium for implementing various embodiments; and
FIG. 7 is a schematic drawing of apparatus for implementing various embodiments.

### DETAILED DESCRIPTION OF THE EMBODIMENTS

As highlighted above, computer vision technologies may be used to monitor a cooking process. However, such technologies may not be straightforward to implement and may lead to inconsistent results. An example scenario involving baking a cake is outlined below.

Computer vision technology based on machine learning may be used to monitor a size of a cake during a cooking process. The change in size of the cake may be indicative of how quickly the cake is cooking. Techniques such as segmenting the cake from the background and/or finding the edge of the cake may be used to detect any size changes. However, there may be several factors that make these solutions sub-optimal. These factors may include: the cake mixture may have various colors, which means that threshold segmenting may work in different ways for different types of cakes (e.g., chocolate cake has a different color to vanilla cake); during cooking, the cake color may change since the surface may brown; and/or the cake may be reflected by some surfaces since different baking trays may have different color, lines, textures, etc.

If segmentation is used (e.g., based on threshold segmentation techniques), the contrast between the cake and the background may vary between different cake types, baking tray types and during the cooking process. This may result in difficulty in maintaining accurate segmentation during the baking process. Inaccurate segmentation may lead to incorrect settings being used in the case of controlling the cooking process based on the segmentation.

Otherwise, highly complex segmentation or edge finding algorithms or machine learning technologies might be needed. However, the low power compute resource of a cooking apparatus may not be able to run such algorithms. Although a cloud-based solution with higher compute power may be used, this involves extensive data processing and signaling over a network, and additional costs such as installing a network interface card on the cooking apparatus and paying for network usage.

Therefore, a simple and efficient computer vision solution is needed.

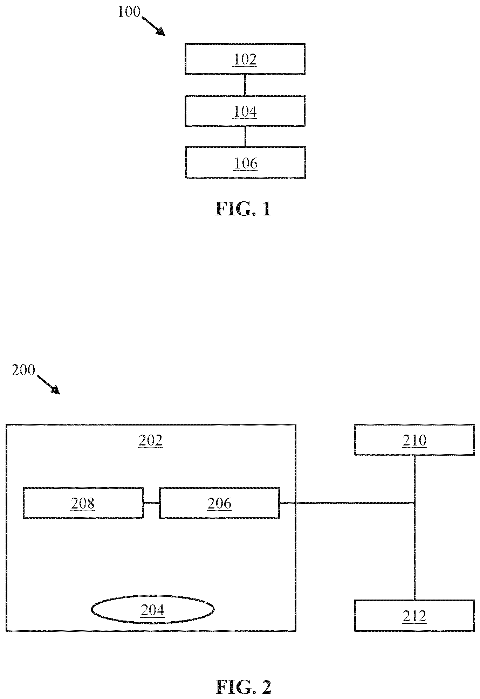

FIG. 1 refers to a computer-implemented method 100 of controlling a cooking process according to an embodiment. The cooking process is implemented by a cooking apparatus.

As referred to herein, a "cooking process" refers to applying heat to food to cause a change in the food. Such application of heat may result in a mere warming of the food, or a more substantial change in the food such as may be achieved by using cooking methods such as baking, roasting, grilling, frying, air frying, etc.

There may be various dominant phases in the cooking process such as a growing/expansion phase, shrinking/contraction phase, and/or a browning phase. For example, in the case of baking cake mixture, a first cooking phase may be dominated by a growing phase during which the cake mixture rises at a rapid rate. There may still be some limited browning during the first cooking phase. A second cooking phase may be dominated by a browning phase during which the rate of rising decreases or stops, and the rate of browning increases compared with the first cooking phase.

As referred to herein, a "cooking apparatus" refers to any device capable of applying heat to food, to complete the cooking process as referred to above. Heat may be applied to the food by the cooking apparatus in one or multiple ways such as by conduction, convection, or radiation. Examples of cooking apparatus include: an oven, microwave oven, hob, air fryer, etc.

The method 100 may be implemented by, for example, a processor of the cooking apparatus or another entity, as described in more detail below.

The method 100 comprises, at block 102, receiving first image data and second image data (either of which may be referred to herein as "image data"). The first image data corresponds to a view of food at a first time of the cooking process. The second image data corresponds to the view of the food at a second time of the cooking process. The view of the food may refer to a field of view of a camera used to acquire the image data.

The following section provides further details of the image data referred to in block 102, after which further details of the method 100 are described.

The second image data may be received subsequently to the first image data (e.g., upon or shortly after the respective image data has been obtained). Although, in some cases, the first and second image data could be received at the same time.

As referred to below, reference image data may be acquired at a reference time (i.e., time = t_0) of the cooking process. In some cases, the reference time refers to when the cooking apparatus starts to heat the food (i.e., t_0 = 0). In some cases, the reference time refers to when the food starts to undergo physical changes as a result of the cooking process (e.g., t_0 > 0 minutes such 5 minutes into the cooking process). In some cases, the first image data may correspond to the reference image data. Although, in some cases, the first image data may be acquired subsequently to the reference image data. That is, the first time may refer to a certain time after the start of the cooking process. This may be relevant where few physical changes occur to the food for a certain amount of time after starting the cooking process and the food does not need to be monitored during this time.

As will be explained in more detail below, each image may be acquired by the camera at specified time intervals during the cooking process. Such intervals may be of fixed duration or different durations throughout the cooking process. In some cases, the duration of such intervals may depend on the type of food being cooked and/or the phase of the cooking process. Thus, in some cases, the duration of such intervals may be changed at least once during the cooking process. This may be useful where there are different cooking phases where the interval used may need to be different depending on the cooking phase. In some cases, the duration of the interval may be fixed throughout the cooking process, which may simplify the implementation of the image data acquisition process. Experimental data is provided below indicating example time intervals that can be used to implement the method 100.

As explained in more detail below, the control of the cooking process may be based on analysis of image data acquired at two times of the cooking process. Thus, the first and second image data may be any two of a set of image data acquired during the cooking process. For example, if a cooking process lasts for 20 minutes and there is a time interval of 2 minutes, a total of eleven images may be acquired (i.e., the reference image data at t_0 plus ten subsequently acquired images at time t(i) for the i-th image). Any two (e.g., consecutive) images of the eleven images may be analyzed to determine how to control the cooking process. In other similar words, the first and second image data may refer to any two of the eleven images. This example is formalized below.

In some cases, the acquisition time of the i-th image may be given by the expression: t(i) = t_0 + i^{∗}k, where k is the duration of the time interval (assuming a fixed interval duration). A person skilled in the art would understand how to modify such an expression appropriately in the case of an interval that changes at least once during the cooking process.

The analysis of the image data may be repeated each time new image data is received. In the case discussed above, the first image data (i.e., the "i-th" image) may be acquired at t(i) = t_0 + i^{∗}k and the second image data (i.e., the "i+1-th" image) may be acquired at t(i) = t_0 + (i+1)^{∗}k.

The image data may be obtained by a camera (as described in more detail below). In some cases, the image data may be raw imaging data provided by the camera. For example, the received image data may not be subject to any image processing and may be in the same format output by the circuitry of the camera). In some cases, the image data may be processed (e.g., processed from the raw format, compressed, or otherwise modified by the circuitry of the camera or any other available processing circuitry).

In some cases, the image data may indicate red-green-blue (RGB) values (or another color space) for each pixel of the imaging data. In some cases, the image data may be in a different color space such as the hue-saturation-value (HSV) color space. The HSV color space (among similar types of color spaces) may be more convenient than the RGB color space for certain analysis such as certain segmentation operations, as described below.

The following section describes further details of the method 100.

The method 100 further comprises, at block 104, determining a first image parameter value from a part of the first image data that corresponds to a region of interest. The region of interest is selected to comprise a part of the view in which movement of a portion of the food during the cooking process is apparent from a comparison of respective parts of the first image data and the second image data that correspond to the region of interest. The first image parameter value is representative of a cooked state of the food at the first time of the cooking process.

In the case of growing or shrinking food, the movement of the portion of the food is observable within the region of interest. The region of interest is selected to comprise the portion of the food that is expected to move during the cooking process. For example, in the case of cake mixture, the region of interest may include a portion the food such as an edge of the cake mixture and the background to the edge (as apparent within the field of view of the camera). As the cake mixture rises, the edge of the cake mixture moves relative to the background. By including the edge of the cake mixture and the adjacent background in the region of interest, any movement of the edge of the cake mixture relative to the background is observable within the region of interest. For example, the proportion of the region of interest comprising the cake mixture may change between the first and second times. In some embodiments, the portion of the food comprises an edge of the food visible in the view with respect to a background to the food visible in the view.

Block 104 of the method 100 further comprises determining a second image parameter value from the part of the second image data that corresponds to the region of interest. The second image parameter value is representative of the cooked state of the food at the second time of the cooking process.

The same region of interest is used for both the first and second image data. The first and second image data may be based on pixel values (e.g., pixel intensity and/or color values) registered by the set of pixels of the camera. The region of interest may comprise a subset of the pixel values. The pixel values of the region of interest may be representative of the appearance of the food (and background) in the region of interest. The appearance of the food and the background may depend on the illumination used and the spectral reflectance of the food and background. During cooking, the spectral reflectance of the food itself may change e.g., as a result of browning. Further, the overall appearance of the food and background (across the region of interest) may change as the proportion of food making up the background changes over time.

The first and second image parameter values may be derived from the subset of pixel values corresponding to the region of interest of the first and second image data, respectively. For example, a function may be applied to the subset of pixel values in order to derive the image parameter value. By way of example, the function may be an average pixel value (e.g., mean, median or mode) from the subset of pixel values. There may be a corresponding change in the image parameter value between the first and second times as a result of the food browning during the cooking process and/or a portion of the food moving during the cooking process.

Block 104 of the method 100 further comprises determining an indication of a change to the cooked state based on a comparison of the first and second image parameter values.

As indicated above, the first and second image parameter values are representative of the cooked state of the food (e.g., depending on how much the portion of food moved and/or the overall browning of the food) at the first and second times, respectively. Thus, by comparing the first and second image parameter values, it may be possible to determine an indication (e.g., a quantity such as a cooking speed or rate of change of cooking speed) representative of the change to the cooked state between the first and second times.

In response to the indication being outside a range specified for the cooking process between the first and second times, the method 100 further comprises, at block 106, providing a cooking parameter for the cooking apparatus to use to cook the food in such a way to compensate for the indication being outside the range.

In some cases, the cooking parameter may refer to a cooking temperature of the cooking apparatus. In some cases, the cooking parameter may refer to a cooking time. In some cases, the cooking parameter may be any parameter that may otherwise affect the cooking process.

The indication may be monitored during the cooking process, for example, at every time interval. The indication is indicative of how quickly the food is cooking. Certain foods need to be cooked quickly enough to ensure that the food cooks in a timely manner and/or to ensure that the food has a desired physical characteristic such as in terms of size, texture, taste, etc. Similarly, certain foods need to be cooked slowly enough to prevent the food from having an undesirable physical characteristic such as excessive expansion/shrinkage and/or a burnt surface. An acceptable outcome may include that the food is cooked within an acceptable timeframe and/or that it has a desired physical characteristic.

In some cases, the range may be predetermined based on experimental data for the type of food being cooked. That is, experiments may be carried out to determine the indication associated with different cooking parameters used to cook the food. Where an indication is associated with an unacceptable outcome of the cooking process, this indication may be outside the range specified under block 106. On the other hand, where an indication is associated with an acceptable outcome of the cooking process, this indication may be within the range specified under block 106. The range may extend between an upper and lower threshold indication. An indication that exceeds the upper threshold may be indicative of the cooking process being too fast to achieve an acceptable outcome. An indication that is below the lower threshold may be indicative of the cooking process being too slow to achieve an acceptable outcome.

Compensating for the indication being outside the range may include indicating that a certain cooking parameter is to be used to change the anticipated outcome of the cooking process. For example, if the anticipated outcome based on the indication is that the food is being cooked too quickly or slowly, a cooking parameter may be identified that reduces or increases the cooking rate, respectively. Such a cooking parameter may be provided to the cooking apparatus itself or to a user interface (e.g., of the cooking apparatus itself or another user equipment). The cooking apparatus may automatically take action to implement the indicated cooking parameter for the cooking process. If the indication is outside the range during a first period of time, providing the cooking parameter to use for a second period of time (subsequent to the first period of time) may compensate for the effect of the indication during the first period of time that is anticipated to otherwise lead to an unacceptable outcome. In other similar words, the provided cooking parameter may increase the chance of the cooking process having an acceptable outcome.

Thus, method 100 and certain other embodiments described herein may provide one or more technical benefits such as described below, and which can be understood with reference to the overall disclosure.

A technical benefit of the method 100 and/or related embodiments may be to facilitate control of a cooking process using a computationally lightweight technique suitable for implementation by resource constrained hardware such as integrated in certain cooking apparatus. Although higher power compute resource (e.g., processing and/or memory) may be available in, for example, a cloud-based computing system, this may imply that additional signaling, power consumption, time, complexity and/or cost is needed for the cloud computing system to control the cooking process. The relative simplicity of the method 100 and/or related embodiments may reduce the need for consuming such higher-powered compute resources. This simplicity may be to the extent that the relative low-cost compute resource of a cooking apparatus or other user equipment may be used to implement the method 100 and/or related embodiments.

Another technical benefit of the method 100 and/or related embodiments may be to improve a result of a cooking process e.g., to achieve a certain quality of food (e.g., the quality in terms of the size, texture, taste, color, etc., of the food). By indicating the cooking parameter for the cooking apparatus to use (e.g., in the event that the indication is outside the range), the method 100 and/or related embodiments may increase the likelihood that the cooking process has an acceptable outcome in terms of the quality of the food. In other similar words, the method 100 and/or related embodiments may increase the likelihood of the food having a quality that is consistent with a recipe or a user specified quality.

Another technical benefit of the method 100 and/or related embodiments may be to improve a reliability of controlling a cooking process. The method 100 and/or related embodiments may represent a relatively simple technique for monitoring the cooked state of the food. In contrast, more complex methods such as based on machine learning may work well in some scenarios but may require extensive training, which could be subject to bias that is hard to overcome.

Some embodiments related to method 100 are now described.

In some embodiments, if the indication is within the range, the indication represents a prediction that the food is expected to meet a specified quality (e.g., have an acceptable outcome) as a result of the cooking process.

In some embodiments, if the indication is outside the range, the indication represents a prediction that the food is unexpected to meet the specified quality (e.g., the acceptable outcome) as a result of the cooking process. In such embodiments, the cooking parameter is to compensate for the indication being outside the range, in order for the food to meet the specified quality as a result of the cooking process.

The indicated cooking parameter may be obtainable from a memory (e.g., of the cooking apparatus, other user equipment or otherwise available online) storing information regarding the cooking parameter to use depending on the indication. For example, the information may be in the form of a lookup table comprising a set of cooking parameters and an associated set of indications (e.g., a set of quantities such as cooking speed and/or rate of change of the cooking speed associated with each of the set of cooking parameters). Such information may be predetermined e.g., based on experimental data acquired by cooking food at different temperatures. Such experiments may be performed by an expert (e.g., a manufacturer of a cooking apparatus) or by the user of the cooking apparatus. In some cases, a plurality of food types may be analyzed. The information may be dependent on the food type since the nature of the cooking process may be different for different food types. By determining the indication, the information can be looked up to determine an appropriate cooking parameter to use depending on the indication.

In some embodiments, the food expands or contracts at a higher rate during a first phase of the cooking process than during a second phase of the cooking process. Further, the food may darken (e.g., brown) at a higher rate during the second phase than in the first phase. The range specified for use during the first phase is different to the range specified for use during the second phase.

There may be scenarios where the cooking process is faster during one cooking phase compared with another cooking phase. It may be useful to monitor the cooking process at shorter time intervals during the faster cooking phase, which may reduce the risk of the cooking process progressing in such a way that adversely affects the outcome of the cooking process.

Further technical benefits will be apparent from the overall content of this disclosure and with reference to the embodiments described herein.

FIG.2 is a schematic drawing of a cooking ecosystem 200 according to an embodiment. Certain embodiments described herein (e.g., method 100) may be implemented in certain parts of the cooking ecosystem 200. The cooking ecosystem 200 depicts various devices and entities which may be deployed as part of the cooking ecosystem 200. Not every device or entity depicted may be needed in some scenarios, as explained below.

The cooking ecosystem 200 comprises a cooking apparatus 202 for cooking food 204. The cooking apparatus 202 comprises a controller 206 for controlling the cooking process. For example, the controller 206 may control a heating element (not shown) of the cooking apparatus 202 (e.g., to control the cooking temperature of the cooking apparatus 202). The controller 206 is communicatively coupled to a camera 208 for capturing images. The camera 208 is positioned such that a region of interest associated with the food 204 is within a field of view of the camera 208. This particular configuration is an example. For example, the camera 208 may or may not be inside the cooking apparatus 202 but may still have the food 204 within its field of view, even if the camera 208 is external to the cooking apparatus 202.

In some cases, the cooking ecosystem 200 comprises a cloud computing service 210 communicatively coupled to the controller 206. A cloud computing service 210 may provide data storage and/or data processing services. The cloud computing service 210 may provide computing resource where there is insufficient computing resource available in any connected devices. In some cases, the cloud computing service 210 may provide updates and other services for the cooking apparatus 202.

In some cases, the cooking ecosystem 200 comprises a user equipment 212 communicatively coupled to the controller 206. A user equipment 212 may refer to any computing device associated with a user (e.g., of the cooking apparatus 202). Examples of user equipment 212 include: a smartphone, smartwatch, tablet, Internet of Things (IoT) device, etc. In some cases, the user equipment 212 may be communicatively coupled to the cloud computing service 210.

Any one or combination of the controller 206, cloud computing service 210 and the user equipment 212 may be used to implement the method 100 and other embodiments described herein. For example, in some cases, the controller 206 may implement the method 100 and related embodiments. In this regard, the controller 206 may comprise a processor (not shown) for implementing the method 100 and related embodiments. In other cases, processing circuitry associated with the various devices and entities of the cooking ecosystem 200 may implement the method 100 and related embodiments.

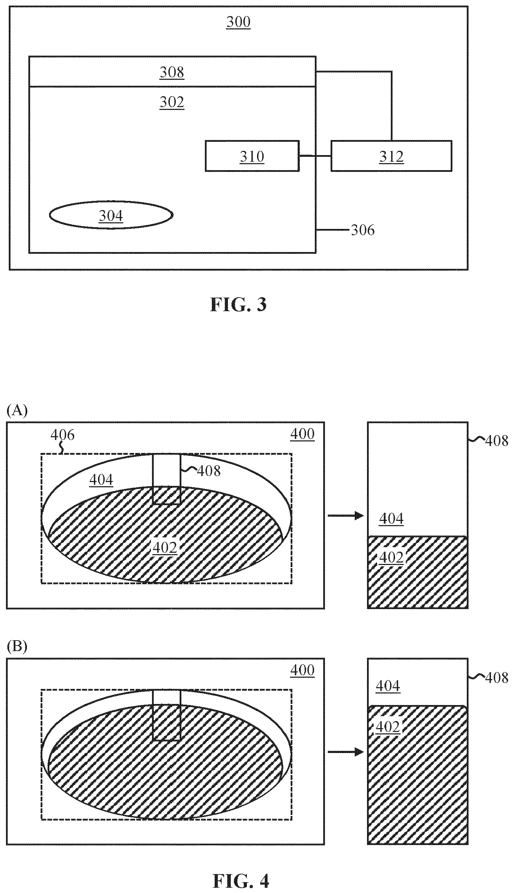

FIG.3 is a schematic drawing of a cooking apparatus 300 for implementing a cooking process according to an embodiment. The cooking apparatus 300 may implement the functionality of certain embodiments described herein such as described in relation to the method 100 of FIG.1. Certain features of the cooking apparatus 300 may correspond to or have similar functionality to features of the cooking apparatus 202 of FIG.2.

The cooking apparatus 300 comprises a cooking chamber 302 for receiving food 304. The cooking apparatus 300 further comprises a housing 306 defining the cooking chamber 302. The cooking apparatus 300 further comprises an air circulation system 308 for circulating air flow inside the cooking chamber 302. Therefore, in this regard, the cooking apparatus 300 may have a similar form to a fan oven or an air fryer. The cooking apparatus 300 further comprises a camera 310 for capturing images (of the "view" associated with the food 304) during the cooking process. The captured images may correspond to or be used to derive the first and second image data.

The cooking apparatus 300 further comprises a controller 312 such as corresponding to the controller 206 of FIG.2. In this embodiment, the controller 312 is configured to implement the method 100. In further embodiments, the controller 312 is configured to implement embodiments related to the method 100.

Thus, in the case of implementing the method 100, the controller 312 is configured to: receive first image data and second image data. The first image data corresponds to a view of food at a first time of the cooking process. The second image data corresponds to the view of the food at a second time of the cooking process.

The controller 312 is further configured to determine a first image parameter value from a part of the first image data that corresponds to a region of interest. The region of interest is selected to comprise a part of the view in which movement of a portion of the food during the cooking process is apparent from a comparison of respective parts of the first image data and the second image data that correspond to the region of interest. The first image parameter value is representative of a cooked state of the food at the first time of the cooking process.

The controller 312 is further configured to determine a second image parameter value from the part of the second image data that corresponds to the region of interest. The second image parameter value is representative of the cooked state of the food at the second time of the cooking process.

The controller 312 is further configured to determine an indication of a change to the cooked state based on a comparison of the first and second image parameter values.

The controller 312 is further configured to determine, in response to the indication being outside a range specified for the cooking process between the first and second times, provide a cooking parameter for the cooking apparatus to use to cook the food in such a way to compensate for the indication being outside the range.

Although FIG.3 describes that the controller 312 of the cooking apparatus 300 implements the method 100, in some cases, other devices or entities (such as depicted by FIG.2) may implement at least some of the functionality of the method 100 (and related embodiments).

FIGS. 4(A)-(B) are schematic drawings of a view 400 of food such as cake mixture 402 (represented by the hatched region) at different times of a cooking process for use in various embodiments. Although the type of food is cake mixture 402, similar principles apply to other types of food, whether they grow or shrink during the cooking process.

The view 400 may be represented by image data, as may be obtained by a camera such as described above. FIG. 4(A) refers to the view 400 at the first time and FIG. 4(B) refers to the view 400 at the second time. The view of the cake mixture 402 is a perspective view, as may be the case for a camera positioned at a top side of a chamber of a cooking apparatus and with the camera facing the center of the chamber.

As depicted by FIGS. 4(A)-(B), the cake mixture 402 is in a circular baking tin. Part of the interior surface of the baking tray visible in the view 400 is a background 404 to the cake mixture 402. As is apparent from the view 400, there is a contrast between the reflectance (e.g., spectral reflectance) of the cake mixture 402 (hatched region) and the background 404 (i.e., the non-hatched region corresponding to the baking tray surface).

The image data may be segmented to identify at least part of the image data comprising at least part of the cake mixture 402 and the background 404. In some cases, this segmentation may be based on identifying pixel value changes in the image data that exceed a threshold corresponding to an edge of an object in the view 400. Such segmentation could be based on a technique such as Otsu's method, which is known to persons skilled in the art. For example, a rim of the baking tray may have a sharp contrast with surrounding objects in the cooking apparatus and can be segmented from such objects. A boundary 406 depicted by FIGS. 4(A)-(B) depicts the segmented part of the image data. The boundary 406 is depicted as intersecting the upper, lower, left, and right points of the rim of such a baking tin, as visible within the view 400.

A region of interest 408 is selected from the segmented part of the image data. An expanded view of the region of interest 408 from the view 400 is also shown in FIGS. 4(A)-(B).

In some embodiments, the region of interest 408 is selected to include corresponding pixels of the first image data and second image data that are within the boundary 406 that encloses at least part of the food (i.e., cake mixture 402) visible in the view. In some cases, the region of interest 408 may be entirely within the boundary 406. In some cases, the region of interest 408 may intersect the boundary 406, as discussed below.

In some embodiments, a pixel in the first and second image data along or enclosed by a perimeter of the region of interest 408 corresponds to a specified pixel along or enclosed by the boundary 406. For example, as depicted by FIGS 4(A)-(B), a section (e.g., line of pixels) of the perimeter of the region of interest 408 may align with a section (e.g., line of pixels) of the boundary 406. In another example, a pixel along the perimeter of the region of interest 408 may intersect the section of the boundary 406. In this example, the region of interest 408 may include pixels enclosed within and outside the boundary 406. In another example, a pixel along the perimeter of the region of interest 408 may correspond to a pixel enclosed by the boundary 406. Thus, at least some pixels within the region of interest 408 may map to at least some pixels within the boundary 406. Not all pixels in the region of interest 408 need to be within the boundary 406. The boundary 406 may help to identify a suitable location for the region of interest 408. In some cases, a segmentation operation may not be needed. Instead, the region of interest 408 may be selected without reference to a segmented boundary 406 (e.g., if the region of interest 408 corresponds to predetermined pixels of the image data).

The area (i.e., number of pixels) of the region of interest 408 is less than the area (i.e., number of pixels) of the segmented part of the image data. The area of the segmented part of the image data may be less than the area of the image data.

In other words, a set of pixels of the camera may be used to generate the image data. A first subset of the set of pixels may form the area of the segmented part. A second subset of the pixels may form the area of the region of interest 408. The second subset of pixels may comprise some of the first subset of pixels. In some cases, the second subset of pixels may comprise pixels not in the first subset of pixels (i.e., from pixels outside the boundary 406). In general, the region of interest 408 may be selected to have a size suitable for analysis by the low-powered compute resources of a cooking apparatus or other user equipment. It has been found that a relatively small size of image data such as 60 by 360 pixels (e.g., from an image of size 1920 by 1080 pixels) is sufficient to provide the functionality described herein. However, fewer or more pixels (as a proportion of the overall image size) may still provide the functionality described herein.

The set of pixels corresponding to the region of interest 408 remain the same between the first and second image data. As can be seen by comparing FIGS. 4(A)-(B), the proportion of the region of interest 408 comprising the hatched region of the cake mixture changes between the first and second times because the cake mixture 402 has risen. The proportion of the region of interest 408 comprising the background 404 changes by an inverse corresponding amount between the first and second times.

In some embodiments, the region of interest 408 comprises a first area and a second area. The first area may map to a part of the food visible in the view 400 (i.e., the hatched area of the region of interest 408). The second area may map to a part of a background to the food visible in the view 400 (i.e., the blank/non-hatched area of the region of interest). Such areas refer to part of the image data.

As the cake mixture 402 rises, the ratio of the first area to second area changes. In other words, the proportion of the region of interest 408 that maps to cake mixture 402 increases while the proportion of the region of interest 408 that maps to the background 404 decreases. Depending on the position of the camera and how the food changes size (e.g., grows or shrinks), the proportion of the region of interest 408 that maps to food may decrease. Since the average apparent intensity and/or color registered by the pixels corresponding to the region of interest 408 changes between the first and second times, the first and second images parameter values may be indicative of the cooked state of the food.

Thus, in some embodiments, the first image parameter value is determined based on a ratio of the first area to the second area in the region of interest of the first image data. Further, the second image parameter value may be determined based on the ratio of the first area to the second area in the region of interest of the second image data.

In some embodiments, the first image parameter value is determined based on a color parameter value derived from a part of the first image data that corresponds to the first area. Further, the second image parameter value may be determined based on the color parameter value derived from a part of the second image data that corresponds to the first area. The color parameter value may refer to a component of a color space such as based on the RGB color space or HSV color space derived from the pixel intensity values of the pixels of the region of interest 408. The change in color parameter value may represent a change in reflectance (including the spectral reflectance) of the food, which is indicative of the cooked state of the food.

Thus, the change in the image parameter value between the first and second times may depend on the following factors: (i) the change of the ratio of the first area to the second area in the region of interest; (ii) a change in reflectance of the food itself between the first and second times, or (iii) a combination of factors (i) and (ii).

The movement of the cake mixture 402 depicted by FIGS. 4(A)-(B) indicates a first cooking phase of the cooking process during which the cake mixture 402 rises. However, a second, distinct, cooking phase involves browning of the surface of the cake mixture 402. In either cooking phase, the image parameter value (e.g., average pixel intensity and/or color value) may change between the first and second times. However, the main contributing reason for the change may be different for the first and second cooking phases. This is because, in the first cooking phase, a change in the ratio of the first area to second area between the first and second times may be the major reason for the change in image parameter value. In the second cooking phase, a change in reflectance of the cake mixture 402 itself may be the major reason for the change in image parameter value. In the first cooking phase, the reflectance of the cake mixture may change but this may contribute less to the change in image parameter value than the change in the ratio. Correspondingly, in the second cooking phase, a change in the ratio may occur but this may contribute less to the change in image parameter value than the change in the reflectance.

The method 100 refers to comparing the first and second image parameter values to determine the indication of the change to the cooked state between the first and second times. If the indication (i.e., a quantity as described herein) is outside the (predetermined) range, a cooking parameter for the cooking apparatus to use to cook the food is provided (e.g., in response to looking up the cooking parameter from information in a lookup table and based on the indication determined by the method 100). The cooking parameter may compensate for the indication being outside the range. The indication is indicative of the cooking speed (as described herein). For example, the quantity corresponding to the indication may be the cooking speed itself. In this example, the range specified by the method 100 may refer to a range of cooking speeds. In another example, the quantity corresponding to the indication may be the rate of change of the cooking speed. In this example, the range specified by the method 100 may refer to a range of rate of change values (i.e., a range of rate of change of cooking speed values). In some cases, the range may be different for the different cooking phases. The cooking apparatus heating temperature may be adjusted automatically (based on the provided cooking parameter) by the cooking apparatus and/or manually by the user being reminded to make some actions (based on the provided cooking parameter) in response to the indication being outside the range. Such an approach may prevent the cake from rising too fast in the first cooking phase, in which cracks may be generated if the heat is too high. Further, this approach may avoid the cake growing too slowly in the first cooking phase, which may lead to insufficient rising or wasted time. Further, this approach may prevent too much browning or too little browning in the second cooking phase.

Since the major contribution to the change in image parameter value between the first and second times depends on which factor is most relevant in the region of interest (i.e., the area or the reflectance of the food in the region of interest), the range may be different for the different cooking phases. However, in some cases, the range may be consistent throughout the cooking process.

A description of an implementation to monitor the progress of cooking cake mixture 402 with reference to FIGS. 4(A)-(B) is now provided. Experiments were performed using this implementation, with the results of such experiments discussed below. Similar principles may apply to other food types although the implementation may be different depending on the setup of the cooking apparatus and the type of food.

Reference image data is acquired prior to or at the start of the cooking process.

A region of interest 408 is selected. The pixels of the image data corresponding to the region of interest 408 may be predetermined for the setup of the cooking apparatus or otherwise determined based on a segmented part of the reference image data. In the present implementation, the region of interest 408 includes the top part of the cake mixture 402 to detect the rising of the cake mixture 402 during the cooking process. The size of the region of interest 408 is 60 by 360 pixels (width by height). The cooking speed and/or surface color change may be detected based on analysis of the images.

From the reference time, t_0 (such as 5 minutes into the cooking process), the image parameter value is calculated at every interval k, such as k = 2 minutes, from t_0. The image parameter value is referred to as *g*(*t*) and corresponds to the average grey-level pixel intensity value in the region of interest 408. The difference between the first time and second time is equal to the duration of the interval, k.

In some embodiments, for a particular time (i.e., the first time or the second time) during the cooking process, the cooking speed *v*(*t*) may be calculated as: *v*(*t*) = *c*_1((*g*(*t*) - *g*(*t_*0))/(*t* - *t*_0)). The parameter c_1 is a constant (e.g., equal to 1) although a different parameter value for c_1 may be used to control scaling. Thus, to calculate the speed of cooking, the difference between the image parameter value at time, t, and the reference time, t_0, is calculated. This difference is divided by the time elapsed since the reference time, t_0. *v*(*t*) is an example quantity corresponding to the indication used in the method 100.

In some embodiments, the rate of change (of the cooking speed), *a*(*t*), is calculated as: *a*(*t*) = *c_*2(*v*(*t*) - *v*(*t* - *k*)). The parameter c_2 is a constant (e.g., equal to 1) to control the scaling. *v*(*t*) corresponds to the cooking speed at the second time. *v*(*t* - *k*) corresponds to the cooking speed at the first time. Thus, to calculate the rate of change, the difference between the cooking speeds at the first and second times is calculated. The rate of change is therefore proportional to the difference between the first and second image parameter values. *a*(*t*) is another example quantity corresponding to the indication used in the method 100.

Thus, in some embodiments, the first image parameter value is an average pixel intensity value (e.g., mean, median or mode) registered by a set of pixels corresponding to the region of interest in the first image data. Further, the second image parameter value is an average pixel intensity value (e.g., mean, median or mode) registered by the set of pixels corresponding to the region of interest in the second image data.

In some embodiments, the indication (e.g., *a*(*t*)) is proportional to a difference between the first and second image parameter values. Similarly, in some embodiments, the indication is proportional to a difference in cooking speed between the first and second times.

In some embodiments, the cooking speed, *v*(*t* - *k*)*,* at the first time (t - *k*) is proportional to a difference between the first image parameter value *get* - *k*) and a reference image parameter value g(t_0) determined from reference image data obtained at a reference time, t_0, of the cooking process. The reference image parameter value *g*(t_0) is determined from a part of the reference image data that corresponds to the region of interest 408. The reference image parameter value *g*(*t_*0) is representative of a cooked state of the food at the reference time of the cooking process. The cooking speed *v*(*t*) at the second time (t) is proportional to a difference between the second image parameter value *g*(*t*) and the reference image parameter value *g*(*t_*0)*.*

In some embodiments, the cooking speed at the first time is inversely proportional to a duration of a time between the first time and the reference time. Further, the cooking speed at the second time is inversely proportional to a duration of a time between the second time and the reference time.

In some embodiments, the range may extend between an upper and lower threshold value of *a*(*t*) for the cooking phase. The upper and lower threshold values may be determined by experimentation in which an expert undertakes multiple experiments in which food is cooked at different temperatures. Such experiments may generate a set of curves representing *v*(*t*) and/or *a*(*t*) for each food sample being cooked. The expert may determine whether the selected temperature cooks the food to a suitable quality and calculate the acceptable range of the rate of change to exclude values of *v*(*t*) and/or *a*(*t*) that result in food that does not have an acceptable quality (such as excessive or insufficient growth or shrinkage, or excessive or insufficient browning). As noted previously, different cooking phases may be associated with different ranges (for each of *v*(*t*) and *a*(*t*)). In some cases, the expert could also determine the range of acceptable rate of change values for each cooking phase. Similarly, the range may extend between an upper and lower threshold value of *v*(*t*) for the cooking phase. Whether to use *v*(*t*) or *a*(*t*) for the indication depends on whether one of these quantities is particularly useful for identifying that the cooking speed is too fast or too slow to achieve an acceptable outcome.

The method 100 and related embodiments may control the cooking process in dependence on the value of *v*(*t*) and/or *a*(*t*), for example, by providing a modified cooking parameter for the cooking apparatus to use to cook the food. The cooking parameter may compensate for the effect of the indication not being within the range. For example, if the cooking process is determined to be too fast (e.g., causing too much food growth or browning), the indication of the cooking parameter to use may inform the consumer to reduce the temperature settings of the cooking apparatus or automatically control the cooking apparatus to reduce the cooking temperature. In this manner, food that would otherwise have an unacceptable quality (if the cooking process were to proceed without modification) may be cooked to an acceptable quality because the cooking parameter may result in modification of the cooking process.

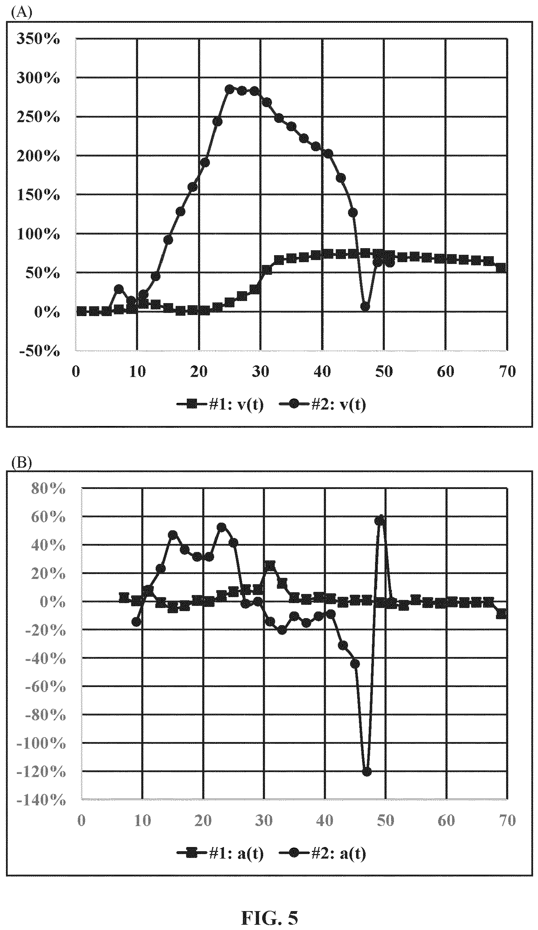

FIGS. 5(A)-(B) are graphs of experimental data obtained when cooking a cake under different scenarios. FIG. 5(A) refers to the cooking speed, *v*(*t*), of an example cake rising in two scenarios (labeled #1 and #2, respectively). FIG. 5(B) refers to the rate of change, *a*(*t*), of the example cake rising in these two scenarios #1 and #2.

In scenario #1, the cooking temperature is acceptable, meaning that the cooking speed (as depicted by FIG. 5A) and the rate of change (as depicted by FIG. 5B) is within a range specified for the cooking speed and rate of change, respectively. The gentle curve that represents the cooking speed associated with scenario #1 is within the range: 0 ≤ *v*(*t*) < 75 %. The rate of change *a*(*t*) derived from the cooking speed *v*(*t*) is within the range -9% < *a*(*t*) < 26 % for scenario #1. The cake cooked under scenario #1 has an acceptable outcome in terms of how much the cake has risen and its level of browning.

In scenario #2, the cooking temperature is unacceptable (too high), meaning that the speed of cooking (as depicted by FIG. 5A) and the rate of change (as depicted by FIG. 5B) is outside the range specified for the cooking speed and rate of change, respectively. In contrast to scenario #1, the steeper curve that represents the cooking speed associated with scenario #2 is within the range: 0 ≤ *v*(*t*) < 285 %. In scenario #2, the cake surface cracked as a result of excessive rising and its surface color browned substantially. Since the cake rises quickly within the first 20 to 30 minutes of the cooking process in scenario #2, there is a rapid change in the ratio of the first area to second area in the region of interest within the first 20 to 30 minutes, which leads to a steep increase in the value of *v*(*t*) within this timeframe. Further, since the cake browns quickly after about 30 minutes, there is a rapid darkening within the region of interest, which leads to a steep fall in the value of *v*(*t*) after 30 minutes.

The experimental data obtained by cooking food under different scenarios (e.g., at different temperatures) may be used to identify the range. In some cases, an expert such as a human or machine learning model may select which experimental data is associated with an acceptable outcome in terms of food quality, and select one or more range(s) based on the selected experimental data.

For example, with reference to FIGS. 5(A)-(B), a first range may be specified for the first cooking phase (cake rising phase) and a second range may be specified for the second cooking phase (browning phase).

The first range may be that if *v*(*t*) > 50 % within the first 20 minutes, then provide a cooking parameter to use to compensate for the indication, *v*(*t*), exceeding 50 % within this time frame. Clearly, the data for scenario #1 does not trigger provision of the cooking parameter. However, the data for scenario #2 does trigger provision of the cooking parameter (i.e., at t = 15 minutes).

The second range may be that if |*a*(*t*)| > 10 % after 35 minutes, then provide a cooking parameter to use to compensate for the indication, |*a*(*t*)|, exceeding 10 % within this time frame. Clearly, the data for scenario #1 does not trigger provision of the cooking parameter. However, the data for scenario #2 does trigger provision of the cooking parameter (i.e., at t = 35 minutes).

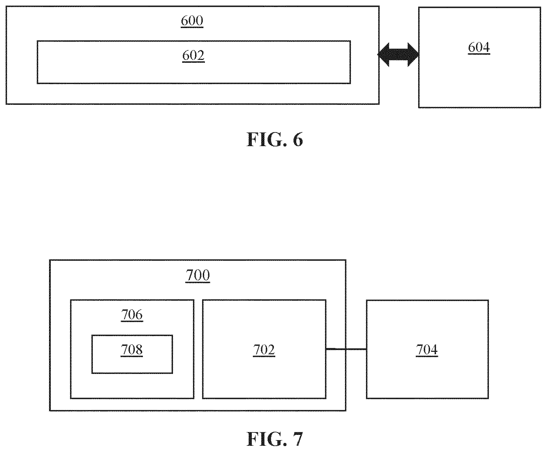

FIG. 6 is a schematic drawing of a non-transitory machine-readable medium 600 for implementing various embodiments described herein. As used herein, the term "non-transitory" does not encompass transitory propagating signals. The machine-readable medium 600 stores instructions 602 readable and executable by a processor 604 to implement the method of any of the embodiments described herein (e.g., method 100 and/or related embodiments). The machine-readable medium 600 and/or the processor 604 may be implemented by any of the controller 206, cloud computing service 210, user equipment 212 and/or controller 312 of Figures 2 or 3.

FIG. 7 is a schematic drawing of apparatus 700 for implementing various embodiments described herein. The apparatus 700 may be implemented by any of the controller 206, cloud computing service 210, user equipment 212 and/or controller 312 of Figures 2 or 3.

The apparatus 700 comprises a processor 702. The processor 702 is configured to communicate with an interface 704. The interface 704 may be any interface (wireless or wired) implementing a communications protocol to facilitate exchange of data (e.g., image data, cooking apparatus control instructions, etc.) with other devices such as another part of the cooking ecosystem 200.

The apparatus 700 further comprises a memory 706 (e.g., non-transitory or otherwise) storing instructions 708 readable and executable by the processor 702 to implement various embodiments described herein (e.g., method 100 or any of the associated embodiments).

Any of the models described herein may be implemented by the processing circuitry for implementing the methods described herein. Thus, certain blocks of the methods may involve use of such models in order to provide the stated functionality. The models may be (machine learning) ML-based or non-ML-based. However, certain embodiments described herein refer to use of non-ML-based models, which may avoid the need to use extensive compute resources and/or enable local processing.

While the invention has been illustrated and described in detail in the drawings and foregoing description, such illustration and description are to be considered illustrative or exemplary and not restrictive; the invention is not limited to the disclosed embodiments.

One or more features described in one embodiment may be combined with or replace features described in another embodiment.

Embodiments in the present disclosure can be provided as methods, systems or as a combination of machine-readable instructions and processing circuitry. Such machine-readable instructions may be included on a non-transitory machine (for example, computer) readable storage medium (including but not limited to disc storage, CD-ROM, optical storage, flash storage, etc.) having computer readable program codes therein or thereon.

The present disclosure is described with reference to flow charts and block diagrams of the method, devices, and systems according to embodiments of the present disclosure. Although the flow charts described above show a specific order of execution, the order of execution may differ from that which is depicted. Blocks described in relation to one flow chart may be combined with those of another flow chart. It shall be understood that each block in the flow charts and/or block diagrams, as well as combinations of the blocks in the flow charts and/or block diagrams can be realized by machine-readable instructions.

The machine-readable instructions may, for example, be executed by a general-purpose computer, a special purpose computer, an embedded processor, or processors of other programmable data processing devices to realize the functions described in the description and diagrams. In particular, a processor or processing circuitry, or a module thereof, may execute the machine-readable instructions. Thus, functional modules of apparatus and other devices described herein may be implemented by a processor executing machine-readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine-readable instructions may also be stored in a computer readable storage that can guide the computer or other programmable data processing devices to operate in a specific mode.

Such machine-readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer program product, the computer program product being stored in a storage medium and comprising a plurality of instructions for making a computer device implement the methods recited in the embodiments of the present disclosure.

Elements or steps described in relation to one embodiment may be combined with or replaced by elements or steps described in relation to another embodiment. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method (100) of controlling a cooking process implemented by a cooking apparatus, the method comprising:
receiving (102):
first image data corresponding to a view of food at a first time of the cooking process; and
second image data corresponding to the view of the food at a second time of the cooking process; and
determining (104):
a first image parameter value from a part of the first image data that corresponds to a region of interest, wherein the region of interest is selected to comprise a part of the view in which movement of a portion of the food during the cooking process is apparent from a comparison of respective parts of the first image data and the second image data that correspond to the region of interest, and wherein the first image parameter value is representative of a cooked state of the food at the first time of the cooking process;
a second image parameter value from the part of the second image data that corresponds to the region of interest, wherein the second image parameter value is representative of the cooked state of the food at the second time of the cooking process; and
an indication of a change to the cooked state based on a comparison of the first and second image parameter values; and
in response to the indication being outside a range specified for the cooking process between the first and second times, providing (106) a cooking parameter for the cooking apparatus to use to cook the food in such a way to compensate for the indication being outside the range.

2. The method of claim 1, wherein:
if the indication is within the range, the indication represents a prediction that the food is expected to meet a specified quality as a result of the cooking process; or
if the indication is outside the range, the indication represents a prediction that the food is unexpected to meet the specified quality as a result of the cooking process, and wherein the cooking parameter is to compensate for the indication being outside the range in order for the food to meet the specified quality as a result of the cooking process.

3. The method of any of claims 1 to 2, wherein:
the food expands or contracts at a higher rate during a first phase of the cooking process than during a second phase of the cooking process;
the food darkens at a higher rate during the second phase than in the first phase; and
the range specified for use during the first phase is different to the range specified for use during the second phase.

4. The method of any of claims 1 to 3, wherein the region of interest comprises:
a first area that maps to a part of the food visible in the view; and
a second area that maps to a part of a background to the food visible in the view.

5. The method of claim 4, wherein:
the first image parameter value is determined based on a ratio of the first area to the second area in the region of interest of the first image data; and
the second image parameter value is determined based on the ratio of the first area to the second area in the region of interest of the second image data.

6. The method of any of claims 4 to 5, wherein:
the first image parameter value is determined based on a color parameter value derived from a part of the first image data that corresponds to the first area; and
the second image parameter value is determined based on the color parameter value derived from a part of the second image data that corresponds to the first area.

7. The method of any of claims 1 to 6, wherein the portion of the food comprises an edge of the food visible in the view with respect to a background to the food visible in the view.

8. The method of any of claims 1 to 7, wherein:
the first image parameter value is an average pixel intensity value registered by a set of pixels corresponding to the region of interest in the first image data; and
the second image parameter value is an average pixel intensity value registered by the set of pixels corresponding to the region of interest in the second image data.

9. The method of any of claims 1 to 8, wherein the indication is proportional to a difference between the first and second image parameter values.

10. The method of claim 9, wherein the indication is proportional to a difference in cooking speed between the first and second times, and wherein:
the cooking speed at the first time is proportional to a difference between the first image parameter value and a reference image parameter value determined from reference image data obtained at a reference time of the cooking process, wherein the reference image parameter value is determined from a part of the reference image data that corresponds to the region of interest, and wherein the reference image parameter value is representative of a cooked state of the food at the reference time of the cooking process; and
the cooking speed at the second time is proportional to a difference between the second image parameter value and the reference image parameter value.

11. The method of claim 10, wherein:
the cooking speed at the first time is inversely proportional to a duration of a time between the first time and the reference time; and
the cooking speed at the second time is inversely proportional to a duration of a time between the second time and the reference time.

12. The method of any of claims 1 to 11, wherein the region of interest is selected to include corresponding pixels of the first image data and second image data that are within a boundary that encloses at least part of the food visible in the view.

13. The method of claim 12, wherein a pixel in the first and second image data along or enclosed by a perimeter of the region of interest corresponds to a specified pixel along or enclosed by the boundary.

14. A non-transitory machine-readable medium (600) storing instructions (602) readable and executable by a processor (604) to implement the method of any one of claims 1 to 13.

15. A cooking apparatus (300) for implementing a cooking process, comprising:
a cooking chamber (302) for receiving food (304);
a housing (306) defining the cooking chamber;
an air circulation system (308) for circulating air flow inside the cooking chamber;
a camera (310) for capturing images during the cooking process; and
a controller (312) configured to:
receive (102):
first image data corresponding to a view of food at a first time of the cooking process; and
second image data corresponding to the view of the food at a second time of the cooking process; and
determine (104):
a first image parameter value from a part of the first image data that corresponds to a region of interest, wherein the region of interest is selected to comprise a part of the view in which movement of a portion of the food during the cooking process is apparent from a comparison of respective parts of the first image data and the second image data that correspond to the region of interest, and wherein the first image parameter value is representative of a cooked state of the food at the first time of the cooking process;
a second image parameter value from the part of the second image data that corresponds to the region of interest, wherein the second image parameter value is representative of the cooked state of the food at the second time of the cooking process;
an indication of a change to the cooked state based on a comparison of the first and second image parameter values; and
in response to the indication being outside a range specified for the cooking process between the first and second times, provide (106) a cooking parameter for the cooking apparatus to use to cook the food in such a way to compensate for the indication being outside the range.
